# EUROPEAN PATENT APPLICATION

(11) **EP 2 354 963 A2**
(43) Date of publication of application: **10.08.2011**
(21) Application number: 10195334.7
(22) Date of filing: 16.12.2010
(51) Int. Cl.: G06F 17/21

(54) **Website font previewing**

(30) Priority: 29.01.2010 US 696872
(71) Applicant: Extensis Inc., Portland, OR 97201 (US)
(72) Inventor: Hammond, Bruce Quincy, Portland, OR 97201 (US); Slater, Chadlee Ray, Portland, OR 97201 (US); Klutz, Davin, Portland, OR 97201 (US)
(74) Representative: Thompson, Andrew John

(57) **Abstract**

Aspects of this disclosure relate to a system and method for loading and viewing a web page in a browser to preview fonts without altering the constituent elements of the web page. According to one or more aspects of this disclosure, the system may include a browser for viewing a web page and previewing fonts on the web page. According to one or more aspects of this disclosure, the method may include receiving a web page at a browser, storing a representation of the web page into a memory, rendering the representation of the web page, receiving a selection of one or more elements of the web page, receiving a font property that specifies a change to a font type and/or a font size, and applying the specified font property to the selected elements.

## Description

### I. FIELD OF ART

The invention is generally directed to viewing fonts, and more particularly to a system and method for previewing fonts as displayed on web pages.

### II. BACKGROUND

Generally, web page design tools allow a user to construct a web page based on a number of constituent elements (e.g., hyperlinks, graphics, text, etc.) that may be described in Hypertext Markup Language (HTML), Cascading Style Sheets (CSS), etc. For example, HTML specifies elements based on particular tags (e.g., text elements such as <p>, list elements such as <dl>, etc.). When designing the constituent elements of a web page, designers may desire to visually choose a font which best suits their aesthetic desires. Conventional design tools require the designer to alter the constituent elements of the web page. For example, web page editor software (e.g., What You See Is What You Get (WYSIWYG) web page editors) may make changes to a web page by modifying the web page's source code (e.g., HTML and/or CSS code). Accordingly, to preview a font using a conventional web page editor, a font is selected and the source code for the web page currently loaded in the web page editor is modified to reflect the new source code. Depending on the containment of the altered HTML, the viewing of the altered HTML with the selected font may potentially violate licensing usage restrictions on the font. Therefore, it would be advantageous to have a system and method which allows for previewing of the selected font at the client level, without altering the source code and/or the constituent elements of the web page.

### III. BRIEF SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In light of the above, it would be beneficial to provide a system and a method that previews a font on a web page at the client level, without altering the constituent elements of the web page. Therefore, aspects of this disclosure relate to a system for previewing fonts on a web page without altering the constituent elements of the web page that includes a browser for viewing a web page, selecting elements of the viewed web page, and previewing fonts on the web page. According to aspects of this disclosure, the browser may include a user interface. For example, the user interface of the browser may include a title bar, a navigation bar, a status bar, and a web page view area. Further, the browser and/or the user interface may be configured such that selecting elements of the viewed web page does not cause the web page to reflow. In one or more embodiments, the browser may download fonts from a server and activate the downloaded fonts only for preview purposes.

Other aspects of this disclosure relate to a method for loading and viewing a web page in a browser to preview fonts without altering the constituent elements of the web page. In one or more arrangements, the method may include receiving a web page at a browser, storing a representation of the web page into a memory, rendering the representation of the web page in the browser, receiving a selection of one or more elements of the representation of the web page, receiving input defining one or more font property values, modifying the selected elements of the representation of the web page according to the received one or more font property values, and rendering the representation using the modified selected elements to preview the web page with the font display characteristics of the received font property values.

These and other novel advantages, details, embodiments, features and objects of the disclosure will be apparent to those skilled in the art from the following detailed description, the attached claims and accompanying drawings, listed herein.

### III. BRIEF DESCRIPTION OF DRAWINGS

Certain embodiments are illustrated by way of example and not limited in the accompanying figures in which like reference numerals indicate similar elements and in which:
FIG. 1 illustrates a data processing system configured to perform one or more illustrative aspects of the disclosure.
FIG. 2 illustrates a user interface for viewing a web page and previewing fonts on the web page.
FIG. 3 is a flowchart of an illustrative method for viewing a web page in a browser and previewing font changes without altering the constituent elements of the web page.
FIG. 4A and FIG. 4B illustrate exemplary displays for reporting web page loading progress.
FIG. 5 illustrates an exemplary visual indicator for a selected element of the rendered representation of a web page.
FIG. 6 illustrates an exemplary rendered representation of a web page having multiple elements selected.
FIG. 7 illustrates an exemplary rendered representation of a web page having an unselected element and a selected anchor element.
FIG. 8 illustrates exemplary font changes that may be previewed according to one or more aspects of the disclosure.
FIG. 9A illustrates an exemplary rendered representation of a web page having multiple selections before applying a change to a font property of the selected elements.
FIG. 9B illustrates the exemplary rendered representation of a web page of FIG. 9A after one received font property has been applied to the selected elements of FIG. 9A and subsequently rendered, according to one or more aspects of the disclosure.
FIG. 9C illustrates the exemplary rendered representation of a web page of FIG. 9A and FIG. 9B having multiple selections after a second change to a font property has been applied to the rendered representation of a web page according to one or more aspects of the disclosure.

### IV. DETAILED DESCRIPTION

In the following description of the various embodiments, reference is made to the accompanying drawings, which form a part hereof, and in which are shown by way of illustration various embodiments in which the invention may be practiced. It is to be understood that other embodiments may be utilized and structural and functional modifications may be made without departing from the scope of the present invention.

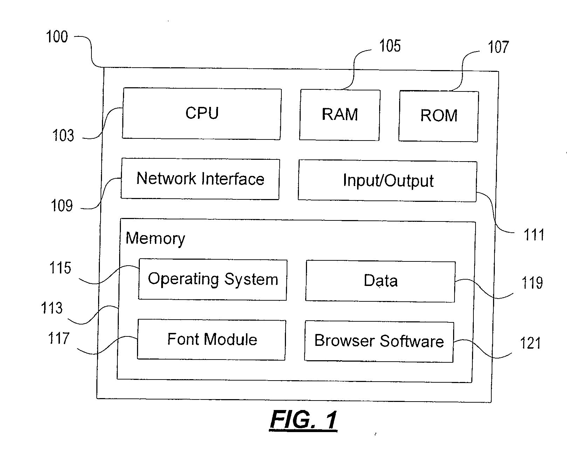

Aspects of this disclosure relate to a system and method for previewing fonts on a web page without altering the constituent elements of the web page (i.e., non-destructive previewing of fonts). With reference to FIG. 1, the methods and techniques described herein may be implemented as a computer program product 117 or combination of computer program products, for use in a computing system environment 100. Computing system environment 100 represents a generic computing device, e.g., a desktop computer, laptop computer, notebook computer, network server, portable computing device, personal digital assistant, smart phone, mobile telephone, distributed computing network device, or any other device having the requisite components or abilities to operate as described herein and thereby be configured as a special-purpose device according to one or more illustrative aspects of the invention. Environment 100 may include central processing unit or other processor 103, RAM or other volatile memory 105, ROM or other boot memory 107, network interface(s) 109 (e.g., Ethernet, wireless network interface, modem, etc.) through which computer 101 connects to a network (e.g., Internet, LAN, WAN, PAN, etc.), input/output port(s) 111 (e.g., keyboard, mouse, monitor, printer, USB ports, serial ports, parallel ports, IEEE 1394/Firewire ports, and the like), and non-volatile memory 113 (e.g., fixed disk, optical disk, holographic storage, removable storage media, flash drive, etc.). Environment 100 may store various programs, application, and data in memory 113, including, but not limited to, operating system software 115, font module 117 (e.g., one or more plug-ins and/or other font software), data 119 (e.g., web pages, font files, and other data described herein), and browser software 121 (e.g., software to process web pages for display, etc.).

One or more aspects of the disclosure may be embodied in computer-usable data and/or computer-executable instructions, such as in one or more program modules, executed by one or more computers or other devices to render one or more fonts for output on a device such as a display or a printer. Generally, program modules include routines, programs, objects, components, data structures, etc. that perform particular tasks or implement particular abstract data types when executed by a processor in a computer or other data processing device. The computer executable instructions may be stored on a computer readable medium such as a hard disk, optical disk, removable storage media, solid state memory, RAM, etc. As will be appreciated by one of skill in the art, the functionality of the program modules may be combined or distributed as desired in various embodiments. In addition, the functionality may be embodied in whole or in part in firmware or hardware equivalents such as integrated circuits, field programmable gate arrays (FPGA), and the like. Particular data structures may be used to more effectively implement one or more aspects of the invention, and such data structures are contemplated within the scope of computer executable instructions and computer-usable data described herein.

With reference to FIG. 1, the computing system environment 100 may include a browser 121 that interacts with an operating system 115 and a network interface 109. Operating system 115 includes application program interfaces for activating fonts, so processes running on the operating system 115 may access and use the activated fonts, including the browser 121. Fonts may be stored in a font folder and a system registry database that maintains information regarding the fonts. In some embodiments, computing system environment 100 may include a printing system that interacts with the operating system 115 and/or the browser 121. In some arrangements, computing system environment 100 may include a font manager server that provides downloadable fonts. Once downloaded, these fonts may be activated by operating system 115 so that the fonts are available to the browser 121. In some embodiments, computing system environment 100 may include the browser 121 as a component in a font manager application. In these embodiments, a user may interact with the font manager application (e.g., select a "web preview" option) to open the browser 121. For example, the font manager application may enter into a web preview mode that utilizes the browser 121. As another example, the font manager application may open a new tab in the font manager user interface for browser 121. As yet another example, the font manager application may open a new window for browser 121 (e.g., browser 121 may be opened as a "web page preview" window, etc.).

Some aspects of the disclosure relate to a system for previewing fonts on a web page without altering the constituent parts of the web page. It should be understood that many various user input devices may be employed including, but not limited to, a mouse, a keyboard, a track ball, touch screen, voice recognition circuitry, infrared control and the like.

According to aspects of this disclosure, a user may interact with computing system environment 100 to view a web page in the browser 121. In one example, the user may interact with the browser 121 and/or the network interface 109 to download a web page from one or more networks (e.g., the Internet) and subsequently view the downloaded web page in the browser 121.

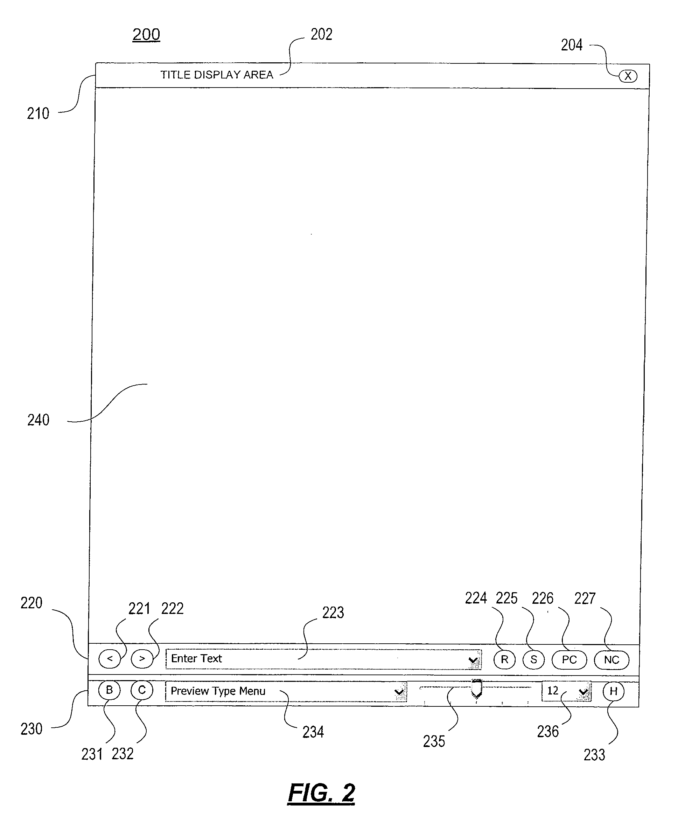

An illustrative user interface (UI) 200 of a browser such as browser 121 (FIG. 1) for viewing a web page and previewing fonts on the web page is shown in FIG. 2. By interacting with interface 200, a user may preview fonts on a currently viewed web page, as will be discussed in detail below. Four separate pane areas are shown in FIG. 2, title bar 210, navigation bar 220, status bar 230, and web page view area 240. As seen in FIG. 2, title bar 210 may include a title display area 202 for displaying the title of the current web page loaded in the browser and a button 204 to hide the browser. In some embodiments, the UI 200 may include tool-tip text associated with particular controls of the UI that provide a user with more information about the controls (e.g., upon mouse pointer layover to a particular control, a window may pop up displaying the tool-tip text). In some embodiments, the browser may load the previously viewed web page automatically upon launching the UI 200.

According to aspects of the disclosure, navigation bar 220 may provide controls to allow a user to navigate to different web pages as well as navigate through the changes being previewed (e.g., changes to the fonts of the currently viewed web page). As seen in FIG. 2, navigation bar 220 may include a back history button 221, a forward history button 222, a uniform resource locator (URL) combo box 223, a refresh page button 224, a stop loading page button 225, a previous change button 226, and/or a next change button 227.

The back history button 221 may provide controls that cause the browser to navigate back one page in the browser's web page history. The forward history button 222 may provide controls that cause the browser to navigate forward one page in the browser's web page history. In some embodiments, the back history button 221 and the forward history button 222 may be disabled if there are no web pages in the in the browser's web page history. In some embodiments, the back history button 221 may be associated with tool-tip text (e.g., "Click here to go back one page", etc.). In some embodiments, the forward history button 222 may be associated with tool-tip text (e.g., "Click here to go forward one page", etc.).

The URL combo box 223 may provide controls for address bar functionality. For example, in some embodiments, a user may navigate to a web page by entering a web page URL into the URL combo box 223 and pressing the "Enter" button on the keyboard. Once the page is loaded into the interface 200 the web page URL will be saved to the URL combo box 223 as part of a saved web page URL list for the URL combo box 223. In some embodiments, the saved web page URL list may persist between UI 200 sessions. The URL combo box 223 may provide suggested web page URLs based on entered text in the URL combo box 223. The suggestions may be web page URLs that have a matching portion of the typed URL. In some embodiments, a user may navigate to a web page interacting with the combo box (e.g., "dropping" the URL combo box to display the saved web page URL list) and selecting a web page URL from the saved web page URL list. In some embodiments, the URL combo box 223 may be associated with tool-tip text (e.g., "Enter a web page address to preview", etc.).

The refresh page button 224 may provide controls to refresh the contents of the web page currently viewed in interface 200 (e.g., rendered web page). Refreshing the web page may cause any font changes (e.g., fonts being previewed, as discussed below) made to the current web page to be removed from the rendered web page. In some embodiments, a warning may not be presented to a user. In some embodiments, the refresh page button 224 may be associated with tool-tip text (e.g., "Click here to refresh the current page", etc.).

The stop loading page button 225 may provide controls to stop loading the current web page. If a web page is not currently downloading then activating the stop loading page button does nothing. In some embodiments, the stop loading page button 225 may be associated with tool-tip text (e.g., "Click here to stop loading the current page", etc.).

The previous change button 226, and/or the next change button 227 may provide the controls to cycle through the changes being previewed (e.g., changes to the fonts of the currently viewed web page). For example, activating the next change button 227 provides controls to cycle to the next element on the currently viewed web page that has been changed. The next element is relative to the currently selected element. Similarly, activating the previous change button 226 provides controls to cycle to the previous element on the currently viewed web page that has been changed. The previous element is relative to the currently selected element. In some embodiments, the previous change button 226 and/or the next change button 227 may be included on an information browser pane. In some embodiments, the previous change button 226 and/or the next change button 227 may be disabled until a change has been applied to the currently viewed web page. In some embodiments, interface 200 may include an information browser pane (not shown) that provides a summary view of the changes being previewed in the currently viewed web pages (e.g., a listing of the changes being previewed, details on the elements that have been modified by the changes being previewed, etc.). In some embodiments, the previous change button 226 and/or the next change button 227 may be associated with tool-tip text (e.g., "Click here to reveal the previous change on this page", "Click here to reveal the next change on this page", etc.).

According to aspects of the disclosure, status bar 230 may provide controls to allow a user to manage selections of the web page's constituent elements, apply changes to the web page for preview, as well as manage the visibility of the navigation bar 220. As seen in FIG. 2, status bar 230 may include a select page body button 231, a clear selection button 232, a hide/show navigation bar button 233, a preview type menu 234, a font size slider control 235, and/or a font size combo box control 236.

The select page body button 231 may provide controls that, upon activation, clear any current selections of elements, remove any visual indicators displayed on the currently viewed web page, select every element on the currently viewed web page, and draw a visual indicator around the outside edge of the currently viewed web page. In some embodiments, the select page body button 231 may be associated with tool-tip text (e.g., "Click here to select the web preview page body", etc.).

The clear selection button 232 may provide controls that, upon activation, clear any current selections of elements and remove any visual indicators displayed on the currently viewed web page. In some embodiments, the clear selection button 232 may be associated with tool-tip text (e.g., "Click here to clear the web page selections", etc.).

The hide/show navigation bar button 233 may provide controls that, upon activation, hide/show the navigation bar 220. For example, when a user activates the hide/show navigation bar button 233 while the navigation bar 220 is visible, the navigation bar 220 will be made non visible. Similarly, when a user activates the hide/show navigation bar button 233 while the navigation bar 220 is not visible, the navigation bar 220 will be made visible. In some embodiments, the hide/show navigation bar button may be associated with tool-tip text (e.g., "Click here to hide/show the navigation bar", etc.).

The preview type menu 234 may provide controls for a user to view the fonts that may be previewed and select a desired font to preview on the selected elements of the currently viewed web page. For example, a user may interact with the preview type menu to open up a list of fonts available to the underlying browser. In some embodiments, the fonts available to the browser may be provided by the operating system such as operating system 115 (FIG. 1). In some embodiments, the fonts available to the browser may be provided by the font manager application, as discussed above. Additionally or alternatively, the fonts available to the browser may include fonts downloaded from a font manager server. Similarly, the fonts available to the browser may include fonts downloaded from the Internet and/or world-wide-web. In some arrangements, the browser may download fonts from the Internet, the world-wide-web, and/or a font manager server and activate the downloaded fonts only for preview purposes (e.g., activated such that only the browser may access/use the downloaded fonts). In some embodiments, as discussed in detail below, after selecting a font in the preview type menu 234, the browser may receive the selected font type and the selected elements on the currently viewed web page in browser may be modified to preview the selected font type. In some embodiments, the preview type menu 234 may be associated with tool-tip text (e.g., "Click here to view the fonts available for preview", etc.).

In some embodiments, the preview type menu 234 may have a default value corresponding to the font type of the last selected element of the rendered web page. If zero elements have been selected, the preview type menu 234 may default according to a predefined scheme (e.g., the font type of the first element of the rendered web page having a defined font size, a font type predetermined by browser, etc.). Additionally, the current value of the preview type menu 234 may be updated as elements are selected. For example, in some embodiments, the current value of preview type menu 234 may be updated to have a value corresponding to the font type of the last selected element of the rendered web page.

The font size slider control 235, and/or the font size combo box control 236 may provide controls to select a particular font size a user desires to preview in the selected elements of the currently viewed web page. According to aspects of the disclosure, as discussed in detail below, after selecting a font size, the underlying browser may receive the selected font size, and the selected elements on the currently viewed web page in the browser may be modified to preview the selected font size. For example, a user may interact with the font size slider control 235 (e.g., slide the slider to the left and/or right) to increase/decrease the fonts size of the currently selected elements of the currently viewed web page. As another example, a user may interact with the font size combo control 236 (e.g., click on the combo box and select a listed number from the drop down list, which represents a particular font size) to select a particular font size for the currently selected elements of the currently viewed web page. In some embodiments, the font size slider control 235 and/or the font size combo box control 236 may be associated with tool-tip text (e.g., "Click here to modify the font size", etc.).

In some embodiments, the font size slider control 235 and/or the font size combo box control 236 may have a default value corresponding to the font size of the last selected element of the rendered web page. If zero elements have been selected, the font size slider control 235 and/or the font size combo box control 236 may default according to a predefined scheme (e.g., the font size of the first element of the rendered web page having a defined font size, a font size predetermined by the browser, etc.). Additionally, the current value of the font size slider control 235 and/or the font size combo box control 236 may be updated as elements are selected. For example, in some embodiments, the current value of the font size slider control 235 and/or the font size combo box control 236 may be updated to have a value corresponding to the font size of the last selected element of the rendered web page.

As also seen in FIG. 2, the web page view area 240 provides a pane for viewing the web page in interface 200. According to aspects of the disclosure, the web page view area provides a user the ability to visually inspect the changes made to the constituent elements of the web page. For example, if the user, using the controls provided by status bar 230, makes a change to a font of the web page currently viewed in interface 200, the change may be inspected in the web page view area 240. According to other aspects of the disclosure, the web page view area provides a user the ability to select one or more elements of the displayed web page by interacting with the web page view area 240, as will be discussed in detail herein.

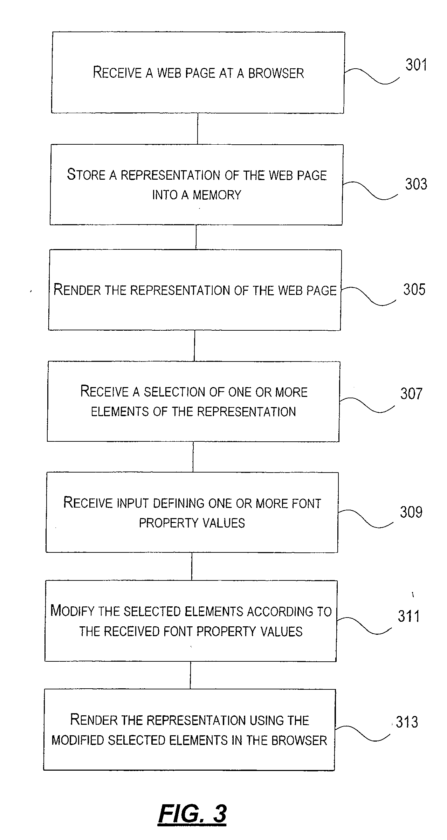

As discussed above, a web page may be loaded and viewed in interface 200 to preview fonts without altering the constituent elements of the web page. It is noted that a browser may access web pages currently published on the world-wide-web and/or Internet (i.e., web pages accessible on the world-wide-web/Internet through a URL) so that font changes may be previewed before the font changes may be committed to the published web pages. FIG. 3 is a flowchart of an illustrative method for viewing a web page in a browser and previewing font changes without altering the constituent elements of the web page. As seen in step 301 of FIG. 3, a web page is received at a browser. A web page may be received at a browser in a variety of ways. Generally, the browser may access a web page corresponding to a web page address and begin downloading the web page. For example, a user may enter a desired web page address into an address field of the browser to begin receiving the web page at the browser. As another example, referring to FIG. 2, a user may enter in a web site URL into the URL combo box 223 and press the "Enter" key on the keyboard. In some embodiments, when the interface 200 is first launched, the interface 200 may access the last previously viewed web page automatically to begin receiving the last previously viewed web page.

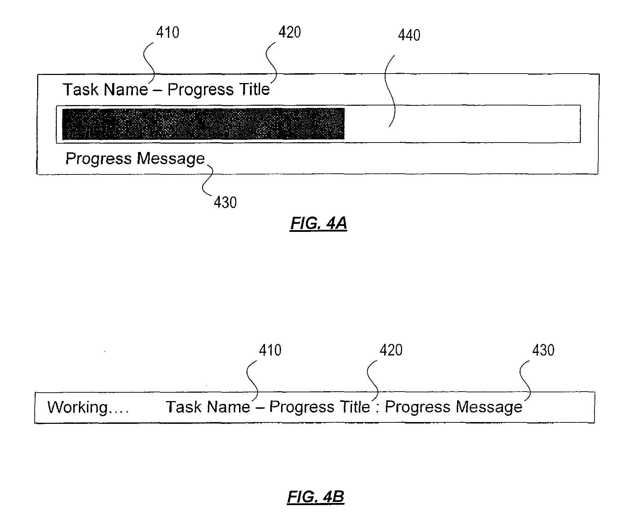

According to aspects of this disclosure, the browser may include display regions that indicate the loading progress of the web page being received at the browser. FIG. 4A and FIG. 4B illustrate exemplary displays for reporting web page loading progress. As seen in FIG. 4A and FIG. 4B, progress display 400 includes a task name 410, progress title 420, and progress message 430. In some embodiments, the task name 410 may be text associated with browser (e.g., "Web Preview"). In some embodiments, the progress title 420 may be text describing the loading of a web page (e.g., "Downloading page content"). In some embodiments, as seen in FIG. 4B, the progress message 430 may be text associated with the web page being loaded (e.g., the domain name of the currently downloading web page). Additionally, in some embodiments, progress may be reported to the user via a progress bar 440, which reports the progress in graphical form (e.g., shading an area from 0% to 100% of the progress bar 440 according to the current progress). In some embodiments, progress bar 440 may be configured to report the progress for each item (e.g., individual frames of a web page, images of a web page, web page markup, etc.) of the web page being downloaded. In these embodiments, the progress bar 440 would report 100% progress multiple times (e.g., for each item downloaded) for some web pages.

Referring again to FIG 3, as seen in step 303 of FIG. 3, a representation of the received web page is stored into a memory. According to aspects of this disclosure, storing a representation of the received web page contributes to providing a user the ability to preview fonts on the web page without altering the constituent elements of the web page. The representation of the web page may be stored in a number of different formats. In some embodiments, the representation of the web page may be a local copy (e.g., the HTML source code) of the web page. In other embodiments, the representation of the web page is a document object model (DOM) representation. In some arrangements, the web page may need to be processed to create the DOM representation. For example, HTML code may be parsed and converted into a DOM representation. Such processing may be done as the representation is being stored in the local memory. Alternatively, the web page may be first stored and then subsequently processed to convert the web page to a DOM representation. Generally, a DOM includes one or more elements, with the elements at least corresponding to the constituent elements of the web page.

As seen in step 305 of FIG. 3, the representation of the web page is rendered in the browser. According to aspects of the disclosure, rendering the representation of the web page contributes to providing a user the ability to preview fonts on the web page without altering the constituent elements of the web page. Rendering the representation of the web page in the browser provides the user with a current view of the web page. For example, the representation of the web page may be rendered in a viewing area of the browser (e.g., web page view area 240 of FIG. 2) to provide the user with a current view of the web page. In some arrangements, as elements of the representation are stored in local memory, the elements may be rendered in the browser. In other arrangements, only when the representation has been completely stored in local memory may the browser render the representation in the browser.

As seen in step 307 of FIG. 3, a selection of one or more elements of the rendered representation is received. To perform a selection of an element, a user may select one or more elements of the rendered representation by interacting with the displayed elements. For example, to perform a selection of an element, a user may select one or more elements of the rendered representation by moving a mouse pointer over the desired elements in the viewing area of the browser and performing a mouse click when the mouse pointer is at each desired element. When an element is selected, a user may modify the font type and/or size to preview how different fonts would appear in the selected element, as discussed in detail below. In some embodiments, browser may store a record and/or list of currently selected elements (e.g., a data array containing references to the currently selected elements of the stored DOM). Additionally, when an element of the rendered representation is selected, a visual indicator will be rendered to indicate that the element is selected. For example, an outer perimeter of the selected element (or similar region) may be rendered with a solid or broken (e.g., dotted) line and/or highlighted. As another example, an area of the selected element may be shaded to indicate the selection.

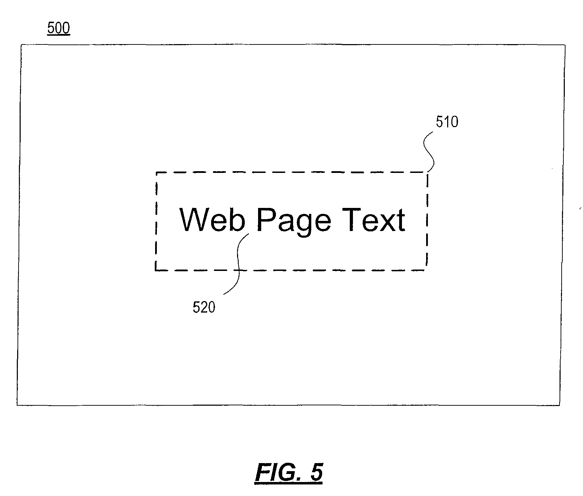

FIG. 5 illustrates an exemplary visual indicator 510 for selected element 520 of the rendered representation 500. In some embodiments, the visual indicator is rendered so that the rendered web page does not reflow. A document reflow may occur when changes to the rendered web page (e.g., changes to elements of the rendered DOM) cause the contents of the document (e.g., elements, text, etc.) to change position. In some arrangements where rendering the visual indicator does not cause the web page to reflow, the browser (e.g., using a component object model (COM) interface) is configured to callback (e.g., through COM callback functions) when regions and/or elements of the web page are rendered. For example, the visual indicator is rendered (e.g., using GDI+) after receiving the callback for the region and/or element that the visual indicator is associated with. In other arrangements, the representation of the web page is manipulated to include the visual indicator. After manipulation of the representation, the browser may render the representation, thereby displaying the visual indicator. This may cause the rendered web page to reflow.

According to aspects of the disclosure, a user may perform a single selection, multiple selections, and an anchor element selection. For example, a single selection selects a single element of the rendered web page. In some embodiments, a user may perform a single selection by moving a mouse pointer to the desired element on the rendered web page and performing a single mouse click. Upon performing the mouse click, only the desired element will be selected. Any previously selected element will be cleared. Additionally, if a user performs a single selection on an element that is already selected, the selection for that element will be cleared (e.g., the element will be unselected and the visual indicator removed). Upon selection, a single visual indicator will be drawn around the selected element, as discussed above (see, e.g., FIG. 5).

A multiple selection selects multiple elements of the rendered web page. In some embodiments, to multiply select elements, a user may move the mouse pointer to the desired element on the rendered web page and perform a single mouse click while simultaneously holding down a modifier key (e.g., "Control" key, "Cmd" key, etc.). Upon performing the mouse click while holding down the modifier key, the desired element will be selected, a visual indicator will be rendered, and any previously selected element will remain selected.

An anchor selection selects an anchor element (e.g., web page link, URL, etc.) of the rendered web page. According to aspects of the disclosure, when a user selects an anchor element, the associated link may not be followed automatically. Instead, the element will be selected and a visual indicator will be rendered. Additionally, if a user performs an anchor element on an anchor element that is already selected, the selection for that anchor element will be cleared. Anchor elements may also be single or multiply selected as discussed above. In some embodiments, upon selecting an anchor element, browser may display a tool-tip instructing the user to hold down a modifier key on the keyboard to follow the link (e.g., tool-tip text "CTRL+SHIFT+Click to follow link", "ALT+Click to follow link", etc.).

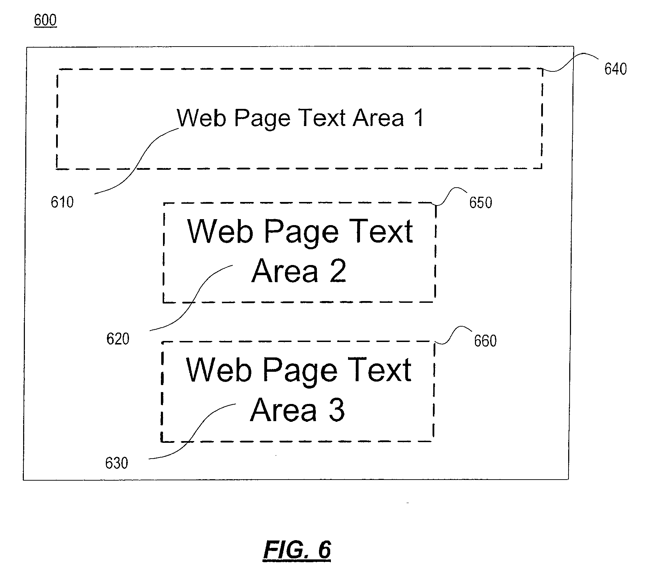

FIG. 6 illustrates an exemplary rendered representation of a web page having multiple elements selected. As seen in FIG. 6, rendered representation 600 includes elements 610, 620 and 630 and corresponding visual indicators 640, 650 and 660. Additionally, if a user performs a multiple selection on an element that is already selected, the selection for that element will be cleared.

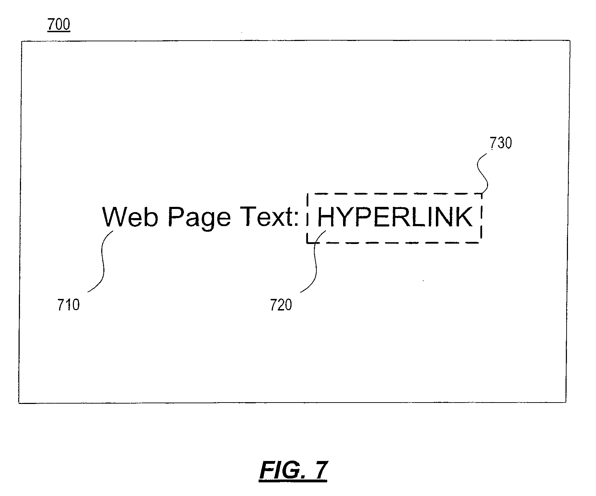

FIG. 7 illustrates an exemplary rendered representation of a web page having a selected anchor element with an exemplary displayed tool-tip. As seen in FIG. 7, rendered representation 700 includes element 710, selected anchor element 720 and visual indicator 730.

Referring again to FIG. 3, as seen in step 309 of FIG. 3, input defining one or more font property values is received. Generally, the one or more font property values may include a particular font size and/or font type. The font property values may be received in a variety of ways. For example, referring to FIG. 2, upon making the desired selection of elements, a user may interact with the controls of interface 200 (e.g., the preview type menu 234, the font size slider control 235, and/or the font size combo box control 236, etc.) to select a desired font property to preview. For example, a user may interact with the preview type menu 234 to select a font property by first performing a mouse click onto the preview type menu 234 to display the drop down the font type list. The user may then search the font type list for a particular font type they wish to preview (e.g., Helvetica, Times New Roman, Webdings, Comic Sans, Arial, etc.) and perform another mouse click over the particular font type in the font type list to select the particular font type. In some embodiments, a font property value received from the preview type menu 234 may specify the font type selected by a user when the user interacts with the preview type menu 234. As another example, a user may interact with the font size combo box control 236 to select a font property by first interacting with the control to drop down font size list. The user may then search the font size list for a particular font size they wish to preview (e.g., size 12, 16, 20, etc.) and perform another mouse click over the particular font size in the font size list to select the particular font size. Alternatively, the user may type in a particular font size into the font size combo box control 236 and press the "Enter" key on the keyboard. In some arrangements, a font property received from the font size combo box control 236 may specify the font size selected by a user when the user interacts with the font size combo box control 236. Similarly, a user may interact with the font size slider control 235 to select a font property. For example, the user may slide the slider to the left to indicate a smaller font size and to the right to indicate a larger font size. The received font property generated by the font size slider may correspond to the direction the user moved the slider (e.g., slider moved to position X selects a font size of 16, while slider moved to position Y selects a font size of 20, where position Y is to the right of position X). Alternatively, the received font property may indicate an amount to increase/decrease the font size according to the direction the user moved the slider (e.g., -2 to decrease font size by 2 points, +2 to increase font size by 2 points, etc.).

In some embodiments, the font property may be embodied in a font change command. In these embodiments, the font change command may include one or more font properties. For example, interface 200 may include an apply font changes button (not shown). In these embodiments, the font change command may be generated upon activation of the apply font changes button. Upon activation, the font change command may be generated such that the current font size of the font size combo box control 236 (e.g., the default or last selected font size of the font size combo box control 236) and the font type of the preview type menu 234 (e.g., the default or last selected font type of the preview type menu 234) is specified. In these embodiments, each font property in the font change command may be applied to the selected elements, as discussed below.

Referring again to FIG. 3, as seen in step 311 of FIG. 3, the selected elements of the representation are modified according to the received font property values. According to aspects of the disclosure, modifying the elements of the representation contributes to providing a user the ability to preview fonts on the web page without altering the constituent elements of the web page. Upon receiving the font property values, the browser may apply the indicated change to the currently selected elements of the representation of the web page (e.g., apply the changes to the selected elements of the stored DOM). If zero elements are currently selected, the received font property is not applied to the elements of the representation. For example, if the font property value specifies a particular font type, the browser will locate the selected elements of the representation in the local memory and modify the selected elements according to the particular font type such that the text of the selected elements is of the particular font type. Similarly, if the font property specifies a particular font size, the browser will locate the selected elements of the representation in the local memory and modify the selected elements according to the particular font type such that the size of text of the selected elements is of the particular font size. Additionally, if the font property specifies a particular font size and a particular font type, the browser will locate the selected elements of the representation in the local memory and modify the selected elements according to the particular font type and font size such that the text of the selected elements if the particular font type and the particular font size. It is noted that, in some arrangements, elements may include portions having unmodifiable text (e.g., text within images, etc.) that may not render in a manner that allows the user to preview the received font property at the portions having unmodifiable text. In some embodiments, upon applying the changes specified by the received font property, the selection of any selected element may be cleared. In other embodiments, the selected elements may remain selected.

According to aspects of the disclosure, a selected element may contain nested elements (i.e., elements within elements). For example, a text element, such as a paragraph element (e.g., HTML element having tag <p>) may be nested with an anchor element (e.g., HTML element having tag <a href>). Moreover, nested elements may contain other nested elements. In some embodiments, the received font property may apply only to the currently selected element (i.e., the parent element) and not to the nested elements (i.e., the child elements). For example, for a font property specifying a font type of the "Helvetica" font type, only the parent element will be changed to display text in "Helvetica." Any child element will remain unchanged. In other embodiments, the font property may apply recursively to all nested elements (e.g., the font property is applied to the parent and the child elements). For example, for a font property value specifying a font type of the "Helvetica" font type, the parent element and the child elements will be changed to display text in "Helvetica."

As seen in step 313 of FIG. 3, the representation is rendered in the browser using the modified selected elements. According to aspects of the disclosure, rendering the representation using the modified selected elements in the browser contributes to providing a user the ability to preview fonts on the web page without altering the constituent elements of the web page. Upon modifying the selected elements according to the received font property values, the browser may render the representation of the web page in the viewing area of the browser so that the user may preview the font property changes in the browser.

According to aspects of the disclosure, a user may apply multiple font property changes to the representation of the web page. For example, the user may select a second font property they wish to preview after previewing the first font property change in the rendered representation of the web page. The second font property will modify the selected elements accordingly (e.g., a first received font property specifying a font size of 20 is applied and a second received font property specifying a font type of "Arial" is then generated and applied). As another example, a user may alter which elements are selected before selecting a second font property they desire to preview in the representation of the web page (e.g., a first received font property specifying a font size of 20 is applied, the user adds/removes an element selection, and a second received font property specifying a font type of "Arial" is then generated and applied). One skilled in the art will appreciate that any arbitrary number of selection alterations and font property changes may be processed by the browser.

According to aspects of the disclosure, the browser may store a record and/or list of the changes applied to the rendered representation. For example, the browser may store a list of elements which have been modified since the web page was first loaded or last refreshed. Referring now to FIG. 2, such a list may be accessed by controls of interface 200, including controls associated with the previous change button 226, and/or the next change button 227 when the respective button is activated. The list may also be accessed when the changes are being exported to the web page source code, as described below.

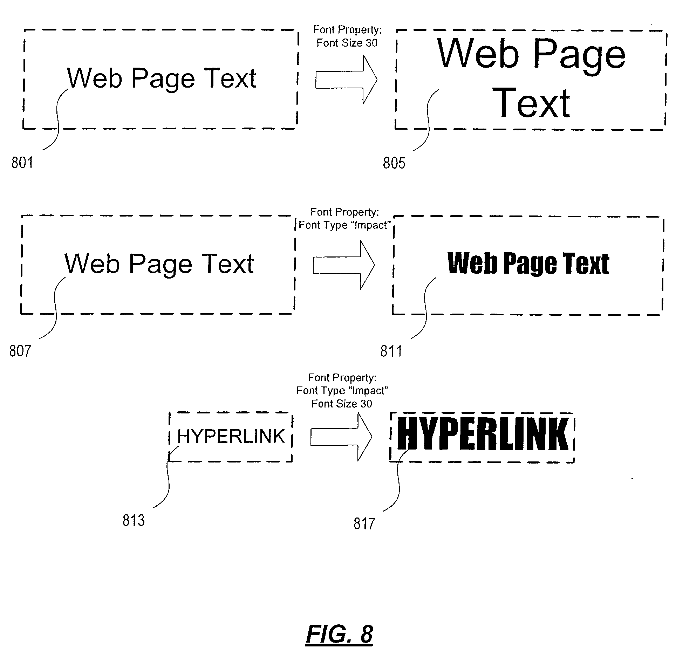

FIG. 8 illustrates exemplary font changes that may be previewed according to one or more aspects of the disclosure. As seen in FIG. 8, element 801 is modified according to font property 803 that specifies a font size of 30 and is subsequently rendered as element 805. As seen in FIG. 8, element 807 is modified according to font property 809 that specifies a font type of "Impact" and is subsequently rendered as element 811. As seen in FIG. 8, anchor element 813 is modified according to a font property 815 that specifies a font type of "Impact" and a font size of 30 and is subsequently rendered as element 817. As illustrated by element 817 of FIG. 8, in some embodiments, applying the received font property to the elements may include modifying the size of the element. In other embodiments, the font property may be applied without modifying the size of the element (see, e.g., element 811).

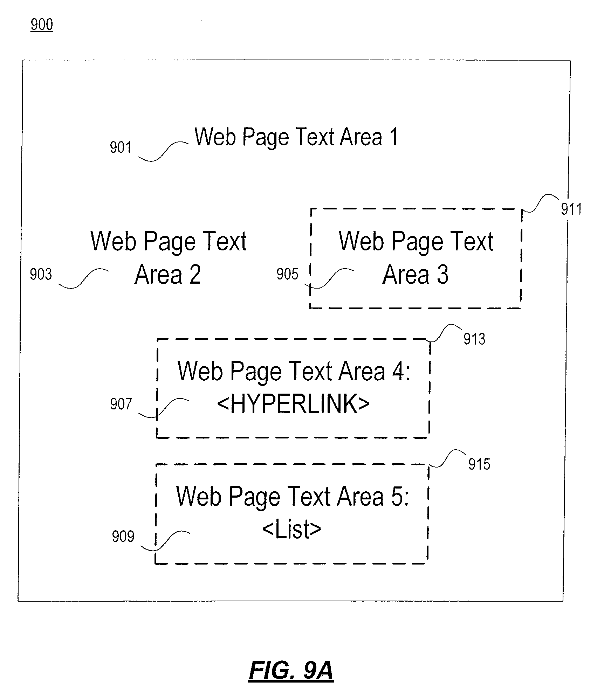

FIG. 9A illustrates an exemplary rendered representation of a web page having multiple selections before applying a change to a font property of the selected elements. As seen in FIG. 9A, the rendered representation 900 includes: elements 901, 903, and 905; nested elements 907 and 909 (i.e., element 907 has a nested hyperlink and element 909 has a nested list); and visual indicators 911, 913 and 915. As seen in FIG. 9A, elements 905, 907 and 909 are selected.

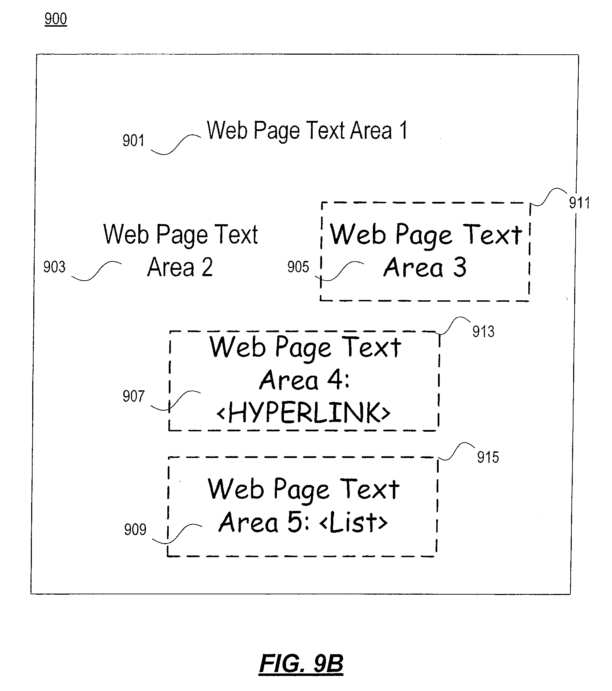

FIG. 9B illustrates the exemplary rendered representation of a web page of FIG. 9A after one received font property has been applied to the selected elements of FIG. 9A and subsequently rendered, according to one or more aspects of the disclosure. As seen in FIG. 9B, the rendered representation 900 includes elements 901, 903, 905, 907 and 909; and visual indicators 911, 913 and 915. As seen in FIG. 9B, selected elements 905, 907 and 909 have been modified and rendered according to a received font property specifying a font type of "Comic Sans."

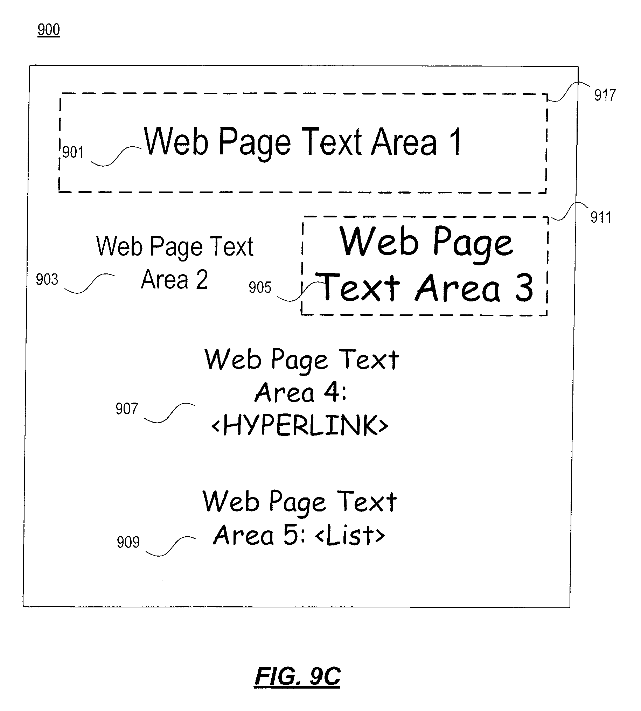

FIG. 9C illustrates the exemplary rendered representation of a web page of FIG. 9B having multiple selections after a second received font property has been applied to the rendered representation of a web page according to one or more aspects of the disclosure. As seen in FIG. 9C, the rendered representation 900 includes elements 901, 903, 905, 907 and 909; and visual indicators 911 and 917. As seen in FIG. 9C, different elements have been selected than those selected in FIG. 9A and FIG. 9B. In FIG. 9C, elements 905 and 901 have been selected prior to applying the second received font property. Accordingly, only elements 901 and 905 were modified according to the second received font property. Thus, element 903 remains in its original state, as illustrated in FIG. 9A, and elements 907 and 909 remain in the state illustrated in FIG. 9B. As seen in FIG. 9C, selected elements 901 and 905 have been modified and rendered according to a received font property specifying a font size of 28. As seen in element 905 of FIG. 9C, applying the received font property included increasing the size of element 905. In some embodiments, increasing the size of a particular element may cause the rendered representation to reflow.

According to aspects of the disclosure, a user may print the rendered representation with the previewed font(s). In some embodiments, user interface 200 may include a control (not shown) to print the currently viewed web page. In other embodiments, the control to print may be provided in a separate user interface. For example, as discussed above, the browser may be included in a font manager application. In these embodiments, the control to print may be provided in the font manager application user interface. In such embodiments, a user may print the web page being previewed in the browser by selecting a control the font manager application user interface (e.g., by selecting a corresponding menu item in the "file" menu of the font manager application UI).

According to aspects of the disclosure, the modified elements may be exported to web page source code. For example, the modified elements may be exported from the locally stored DOM to a second memory as one or more files of web page source code (e.g., HTML and/or CSS code). In some embodiments, the exporting may create the one or more files of web page source code according to the rendered representation. In some embodiments, the exporting may merge the rendered representation (e.g., merge the modified elements) into one or more files of web page source code that may be stored in the second memory. In some embodiments, the second memory may include the web page files being published to the Internet at the URL associated with the web page currently loaded in the browser. In these embodiments, the export process may merge the modified elements into the web page files being published. In some embodiments, the export process may proceed modified element by modified element and propose changes to web page source code that must be accepted (or rejected) by a user. In other embodiments, the export process may proceed automatically.

According to aspects of the disclosure, the exporting may provide syntax checks to check for possible processing differences between different browser types. During the syntax checks, the modified element may be further modified to include additional code and/or fix current code to compensate for the possible processing differences. For example, a first browser type may process nested elements differently than a second browser type. Therefore, a syntax check for nested elements may be conducted. Upon detecting a nested element, code may be modified/inserted so that the element may be rendered consistently across the two browser types.

In some embodiments, the exporting may include a CSS specificity calculator. For example, the CSS specificity calculator may assist the exporting process by processing the modified elements and/or web page source code including one or more CSS rules to locate one or more CSS rules that need to be modified so that the modified elements may be properly exported. As another example, the CSS specificity calculator may assist the exporting process by processing the modified elements and/or the web page source code including one or more CSS rules and provide an indication to a user that indicates the one or more CSS rules that need to be modified so that the modified elements may be exported properly as web page source code. In these embodiments, the indication may also provide the user with a proposed change to the one or more CSS rules so that the source code may be modified according to proper font style/and or size.

The methods and features recited herein may further be implemented through any number of computer readable media that are able to store computer readable instructions. Examples of computer readable media that may be used include RAM, ROM, EEPROM, flash memory or other memory technology, CD-ROM, DVD or other optical disk storage, magnetic cassettes, magnetic tape, magnetic storage and the like.

While particular embodiments of the present invention have been described and illustrated, it should be understood that the invention is not limited thereto since modifications may be made by persons skilled in the art. The present application contemplates any and all modifications that fall within the spirit and scope of the underlying invention disclosed and claimed herein.

Furthermore, while particular combinations of features have been claimed, it will be appreciated that the features of the computer readable medium claims may also be used in conjunction with the method and apparatus claims.

The method may further comprise printing the representation of the web page, wherein the printed representation includes the modified selected elements.

The method defined herein, wherein the received one or more font properties may be generated by a user interface control associated with the browser.

The apparatus defined herein, wherein the web page may be a published web page.

The apparatus may further comprise: exporting the modified selected elements to web page source code; wherein the exporting includes at least one of creating one or more files of web page source code according to the representation of the web page and modifying one or more files of web page source code according to the modified selected elements.

The apparatus may further comprise: printing the representation of the web page, wherein the printed representation includes the modified selected elements.

## Claims

1. One or more computer readable media storing computer readable instructions that, when executed, cause an apparatus to perform the steps of:
receiving a web page at a browser;
storing a representation of the web page into a memory, wherein the representation is different from the web page;
rendering the representation of the web page in the browser;
receiving a selection of one or more elements of the representation of the web page;
receiving input defining one or more font property values, wherein the one or more font property values includes at least one of a font type and a font size;
modifying the selected elements of the representation of the web page according to the received one or more font property values; and
rendering the representation of the web page using the modified selected elements in the browser.

2. The one or more computer readable media of claim 1, further causing the apparatus to perform the steps of:
in response to the received selection, rendering a visual indicator at each selected element in the browser.

3. The one or more computer readable media of claim 2, wherein the rendering the visual indicator at each selected element does not cause the rendered representation of the web page to reflow.

4. The one or more computer readable media of claims 1, 2 or 3, wherein the web page is a published web page.

5. The one or more computer readable media of any preceding claim, further causing the apparatus to perform the steps of:
exporting the modified selected elements to web page source code;
wherein the exporting includes at least one of creating one or more files of web page source code according to the representation of the web page and modifying one or more files of web page source code according to the modified selected elements.

6. The one or more computer readable media of any preceding claim, further causing the apparatus to perform the steps of:
printing the representation of the web page, wherein the printed representation includes the modified selected elements.

7. The one or more computer readable media of any preceding claim, wherein the received one or more font properties is generated by a user interface control associated with the browser.

8. A method comprising:
receiving, by a computing device, a web page at a browser;
storing a representation of the web page into a memory, wherein the representation is different from the web page;
rendering the representation of the web page in the browser;
receiving a selection of one or more elements of the representation of the web page;
receiving input defining one or more font property values, wherein the one or more font property values includes at least one of a font type and a font size;
modifying the selected elements of the representation of the web page according to the received one or more font property values; and
rendering the representation of the web page using the modified selected elements in the browser.

9. The method of claim 8, further comprising:
in response to the received selection, rendering a visual indicator at each selected element in the browser.

10. The method of claim 9, wherein the rendering the visual indicator at each selected element does not cause the rendered representation of the web page to reflow.

11. The method of claims 8, 9 or 10, wherein the web page is a published web page.

12. The method of any of claims 8 to 11, further comprising:
exporting the modified selected elements to web page source code;
wherein the exporting includes at least one of creating one or more files of web page source code according to the representation of the web page and modifying one or more files of web page source code according to the modified selected elements.

13. An apparatus comprising:
a processor; and
memory operatively coupled to the processor and storing computer readable instructions that, when executed, cause the apparatus to perform the steps of:
receiving a web page at a browser;
storing a representation of the web page into a memory, wherein the representation is different from the web page;
rendering the representation of the web page in the browser;
receiving a selection of one or more elements of the representation of the web page;
receiving input defining one or more font property values, wherein the one or more font property values includes at least one of a font type and a font size;
modifying the selected elements of the representation of the web page according to the received one or more font property values; and
rendering the representation of the web page using the modified selected elements in the browser.

14. The apparatus of claim 13, further comprising:
in response to the received selection, rendering a visual indicator at each selected element in the browser.

15. The apparatus of claim 14, wherein the rendering the visual indicator at each selected element does not cause the rendered representation of the web page to reflow.
